# EUROPEAN PATENT APPLICATION

(11) **EP 3 817 273 A1**
(43) Date of publication of application: **05.05.2021**
(21) Application number: 19464019.9
(22) Date of filing: 31.10.2019
(51) Int. Cl.: H04L 9/08, G06F 12/0802

(54) **PERFORMANCE IMPROVEMENT OF A CRYPTOGRAPHIC MODULE OF AN INTEGRATED CIRCUIT**

(71) Applicant: Siemens Aktiengesellschaft, 80333 München (DE)
(72) Inventor: Tudorancea, Marius-Virgiliu, 500419 Brasov (RO)
(74) Representative: Maier, Daniel Oliver

(57) **Abstract**

The invention relates to a method and a system for performance improvement of a cryptographic module (CRY), which is part of an integrated circuit, especially of a so-called System-on-Chip device or SoC device. Input data (D_in) to be encrypted or decrypted are received by the cryptographic module (CRY) and by a monitoring cache unit (CC, 101), which supervises the cryptographic module (CRY). Additionally, a corresponding command (Com) to encrypt or to decrypt the input data (D_in) is received (101). Then the monitoring cache unit (CC) checks (102), if the input data (D_in) to be encrypted or decrypted and the corresponding command (Com) were received previously, for example by checking if the input data (D_in) and the corresponding command (Com) are already stored in a memory unit (MEM) associated with the monitoring cache unit (CC). If the input data (D_in) and the corresponding command (Com) were received previously, e.g. found in the memory unit (MEM), corresponding encrypted or decrypted data (D_out_M) based on the input data (D_in) are read out from the memory unit (MEM, 103) and provided as output data (D_out, 106). If the input data (D_in) and the corresponding command (Com) were not received before, e.g. they are not found in the memory unit (MEM), the monitoring cache unit (CC) triggers the cryptographic module (CRY) to encrypt or decrypt the input data (104). The cryptographic module (CRY) then provides calculated encrypted or decrypted data (D_out_C, 105) as output data (D_out, 106) which are also saved together with the input data (D_in) and the corresponding command (Com) in the memory unit (MEM) associated with the monitoring cache unit (CC, 105).

## Description

### Field of the invention

The present invention relates to a method for performance improvement of a cryptographic module, which is part of an integrated circuit, especially of a so-called System-on-Chip device or SoC device. More specifically, the method can be used to reduce power usage and/or computing time of the integrated circuit during an encryption- and decryption process as well as to enhance the security of the integrated circuit. Furthermore, the present invention also relates to an associated system for performance improvement of a cryptographic module.

### State of the art

Nowadays, integrated circuits (e.g. ASICs, FPGAs, etc.) are widely used in electric and/or electronic equipment units or systems. Usually, an integrated circuit (IC) consists of different circuit elements or blocks of circuit elements placed on a single substrate (e.g. a semiconductor substrate). The circuit elements or blocks of circuit elements are wired and placed on or in a monocrystalline substrate. For example, an integrated circuit may consist of a quantity of different components like a CPU, a memory unit, peripheral interfaces and other components of a computer. An integrated circuit where all or a large part of the functions are placed on one chip are also referred to as System-on-Chip. This integration results in extensive functionalities and applications being made available on a small space.

A System-on- Chip (SoC) is an integrated circuit (IC) that integrates all components of a computer or another electronic system into a single chip. It may contain digital, analog, mixed-signal, and often radio-frequency functions, all on a single chip substrate. A typical application of SoCs is in the area of embedded systems. An embedded system is a computer system with a dedicated function within a larger mechanical or electrical system, often with real-time computing constraints. SoCs can be implemented as an application-specific integrated circuit (ASIC) or using a field-programmable gate array (FPGA). A field-programmable gate array (FPGA) is an integrated circuit designed to be configured by a customer or a designer after manufacturing.

Usually, integrated circuits and especially SoCs find applications in fields such as communications, industrial automation and many more. For most of these applications, security is a paramount and vital issue. Cryptographic methods play an important role in providing data security within an integrated circuit or within a System-on-Chip. Cryptographic methods may be used to protect confidential information (e.g. booth software, application software, authentication or verification data, etc.). For example, encryption operations may be performed, in which a series of transformations as specified by a chosen cryptographic algorithm are performed on plaintext input data (e.g. sequence of bits representing text, numbers, intelligible characters, etc.) using an encryption key (e.g. a sequence of bits) to produce encrypted data, from which it is generally practically unfeasible to determine the unencrypted input data without knowing the cryptographic key. If the cryptographic key is known, decryption operations may be performed on the encrypted data as input data to reproduce the unencrypted data or the corresponding plaintext.

In general, the operations carried out to encrypt and/or to decrypt data are computationally intensive and they are typically implemented in software running on a CPU. This computational intensity has the potential to impact overall system performance of the integrated circuit or of the System-on-Chip. Therefore, cryptographic peripherals or cryptographic modules are used to perform the various encryption and/or decryption operations in an integrated circuit or in a System-on-Chip. These cryptographic modules are generally understood as a kind of co-processor that perform the encryption and/or decryption of data - for example to offload the main processor of the integrated circuit or of the System-on-Chip form the burden of performing the computationally intensive operations involved in encryption and/or decryption. Usually, a set of hardware, software and/or firmware that implements security functions e.g. including cryptographic algorithms and key generation is contained within a cryptographic module or cryptographic peripheral.

The cryptographic module receives input data to be encrypted or to be decrypted and executes the respective operations on the data when e.g. being triggered by encryption commands or decryption commands. Since the memory capacity of a system cache or a random-access memory (RAM) of the integrated circuit or the System-on-chip is normally limited, the results of the encryption and/or decryption are in general not present in the system cache or RAM - for instance after the encryption and/or decryption of the respective data has been done. But sometimes the same input data need to be encrypted and/or decrypted multiple times - e.g. in case of packet loss during data transmissions - and the respective encryption and/or decryption operation has to be repeated by the cryptographic module several times. This may lead to an extension of the processing time in general and causes the cryptographic module to consume power.

Additionally, running encryption and/or decryption operations on the same data several times may be a security risk. Performing repetitive operations on the same data may be exploited by so-called side channel attacks. Especially the so-called Power Analysis may be used, wherein an attacker studies the power consumption of e.g. a cryptographic module to track the encryption/decryption key data or other secret information from the device, for instance.

Simple power analysis (SPA) involves visually interpreting power traces, or graphs of electrical activity over time. Differential power analysis (DPA) is a more advanced form of power analysis which can allow an attacker to compute the intermediate values within cryptographic computations by statistically analyzing data collected from multiple cryptographic operations. The attack exploits varying power consumption of microprocessors or other hardware unit while performing operations using secret keys. Even small biases in the power consumption can lead to exploitable weaknesses. Additionally, DPA attacks have signal processing and error correction properties which can extract secrets from measurements which contain too much noise to be analyzed using simple power analysis.

Methods for hardening cryptographic peripherals may, for example, use special techniques which may depend on the cryptographic algorithms used. Some countermeasure strategies against power analysis can involve algorithmic modifications such that the cryptographic operations occur on data that is related to the actual value by some mathematical relationship that survives the cryptographic operation. E.g. one approach involves so-called blinding parameters to randomize their value. Other countermeasure strategies to reduce the effectiveness of DPA attacks involve hardware modifications -like for example varying the chip internal clock frequency to desynchronize electric signals, which lead in return to algorithmic enhancements of traditional DPA. In general, these methods are quite often time consuming, as well as computational and/or power intensive.

### Summary of the invention

One object of the present invention is to provide a method as well as an associated system for performance improvement of a cryptographic module of an integrated circuit, especially a so-called System-on-Chip which reduces power usage and computing time and which can be easily implemented or applied to any cryptographic module used by an integrated circuit.

According to the present invention the method for performance improvement of a cryptographic module, which is part of an integrated circuit or a so-called System-on-Chip, comprises the following steps:
- first the cryptographic module and a monitoring cache unit receives input data to be encrypted or decrypted;
- then a corresponding command to encrypt or decrypt the input data is received;
- then the monitoring cache unit checks, if the received input data and the corresponding command were received previously - i.e. the monitoring cache unit checks, if the received input data and the corresponding command are already stored in a memory unit associated with the monitoring cache unit;
- if the input data and the corresponding command have been already received (e.g. they are found in the memory unit associated with the monitoring cache unit), the monitoring cache unit reads the corresponding encrypted or decrypted data out from this memory unit and provides the data read-out from the memory unit as output data;
- if the input data and the corresponding command were not received previously (e.g. they are not found in the memory unit associated with the monitoring cache unit), the monitoring cache unit triggers the cryptographic module to calculate the encryption or decryption of the input data and the encrypted or decrypted data calculated by the cryptographic module are saved together with the input data and the corresponding command in the memory unit associated with the monitoring cache unit and they are provided as output data.

By using a monitoring cache unit which supervises the cryptographic module, the present invention can be easily applied to any cryptographic module used within an integrated circuit or System-on-Chip without modifying the cryptographic module.

The monitoring cache unit receives any input data and corresponding encryption commands or decryption commands which are received by the cryptographic module. The monitoring cache unit therefore can detect, if the same input data and associated commands have been sent more than once to the cryptographic module, for example by checking, if these data and commands are stored in the memory unit which is associated to the monitoring cache unit. If the certain input data and corresponding commands have already been received by the cryptographic module, then the monitoring cache unit will trigger the cryptographic module to skip the calculation of the encryption or decryption of these input data. The monitoring cache unit will instead provide the encrypted or decrypted input data, which have been calculated previously, as output data from the memory unit associated with the monitoring cache unit. The encryption and/or decryption of the respective input data, which were sent several times to the cryptographic module e.g. due to packet loss in data transmission, is thus accelerated and the power usage is reduced.

In one embodiment of the present invention the monitoring cache unit triggers the cryptographic module to execute or to calculate the encryption or decryption of the input data by forwarding the corresponding command to the cryptographic unit, if the input data and the corresponding command were not received previously. I.e. the monitoring cache unit does not find the input data and the associated command in its associated memory unit and therefore knows that the encryption or decryption of the received input data have to be calculated.

Furthermore, there is the possibility to analyze the data collected and stored in the memory unit associated with the monitoring cache unit for operational patterns. E.g. methods like Artificial Intelligence (AI) may be used for this analysis. In case certain patterns (e.g. repetition of commands or operations, etc.) can be retrieved, these patterns are stored e.g. in the memory associated with the monitoring cache unit or in a memory unit of the integrated circuit or the System-on-Chip. The data used for this analysis for operational patterns may be input data, corresponding command and the respective encrypted or decrypted data corresponding the input data - i.e. the data stored in the memory unit associated with the monitoring cache unit. Additionally, meta-data corresponding with the stored data (e.g. input data, commands and/or calculated (i.e. encrypted or decrypted) data) may be used for the analysis. Such meta-data are for example headers, order of data and/or repeated data frequency, etc. By analyzing the data stored in the memory unit associated with the monitoring cache unit, the cryptographic flow can be secured and based on the operational patterns found and stored, some side channel attacks like e.g. Differential Power Attacks, cache attacks, etc. could be detected easily and directly by the monitoring cache unit. Certain actions could then be taken like e.g. generating alarms, performing dummy encryption, etc.

In another embodiment of the present invention the monitoring cache unit obfuscate the data (i.e. input data and encrypted/decrypted data) as well as the corresponding commands with pre-defined obfuscation method as a security measure, before the data and corresponding commands are stored in the memory associated with the monitoring cache unit. The obfuscation of the data and commands may make it more difficult to retrieve the data and commands and rises the security of the integrated circuit. The pre-defined obfuscation method may use e.g. needlessly roundabout expressions, data masking, etc. to make it more difficult to restore the data and/or in order to prevent tampering and/or to deter e.g. cache attacks and illegal data read-outs.

As a pre-defined obfuscation method, hashing could be used by the monitoring cache unit, for example.

The objective of the invention is also solved by a system for performance improvement of a cryptographic module of an integrated circuit, especially a so-called System-on-Chip. The system is configured to implement and carry out the method according to the present invention. The system therefore at least comprises:
- a cryptographic module, which receives input data to be encrypted or decrypted and which calculates encrypted or decrypted data based on the input data received and triggered by a corresponding command to encrypt or decrypt the input data;
- a monitoring cache unit, which supervises the cryptographic module, which receives any input data received by the cryptographic module and the corresponding commands and which can trigger the cryptographic module to execute commands and/or operations;
- and a memory unit which is associated with the monitoring cache unit for saving the received input data, the corresponding commands and corresponding encrypted or decrypted data.

By using a monitoring cache unit which supervises the cryptographic module, the present invention can be easily used for cryptographic module and easily applied to any integrated circuit or System-on-Chip. By using a monitoring cache unit supervising the cryptographic module and an associated memory for storing any input data and commands received as well as the corresponding encrypted or decrypted data, the encryption and/or decryption process is easily accelerated, and its power usage is reduced.

In one embodiment of system, the monitoring cache unit is arranged in parallel to the cryptographic module - especially from the view of the data flow. I.e. the input data received by the cryptographic module are also received by the monitoring cache unit. Additionally, the monitoring cache module is dedicated to the cryptographic module and cannot be used globally - i.e. it cannot be used by other modules (e.g. CPU, etc.) of the integrated circuit, thus, hardening the cryptographic module against so-called side channel attacks, for example.

Additionally, in another embodiment the memory unit may be incorporated within the monitoring cache unit. So, only the monitoring cache unit can use the memory unit for storing data and commands which further increases the security.

Furthermore, in another embodiment of the present invention it is foreseen that the system comprises a multiplexer unit. The multiplexer unit receives data either from the monitoring cache unit, in case encrypted/decrypted data based on the respective input data are stored in the memory unit, or from the cryptographic module, in case the encrypted/decrypted data have to be calculated, because the respective input data and the corresponding command was not stored in the memory unit. The multiplexer unit then provides the encrypted/decrypted data received as output data e.g. for further processing within the integrated circuit or System-on-Chip.

### Brief description of the drawings

The invention is described by an embodiment in the accomplished figures in detail. The drawings show in:
- Fig. 1: a schematic illustration of system for performance improvement of a cryptographic module of an integrated circuit, especially a System-on-Chip,
- Fig. 2: a schematic illustration of an embodiment of the steps of the method to improve the performance of a cryptographic module according to the invention.

### Detailed description of exemplary embodiment

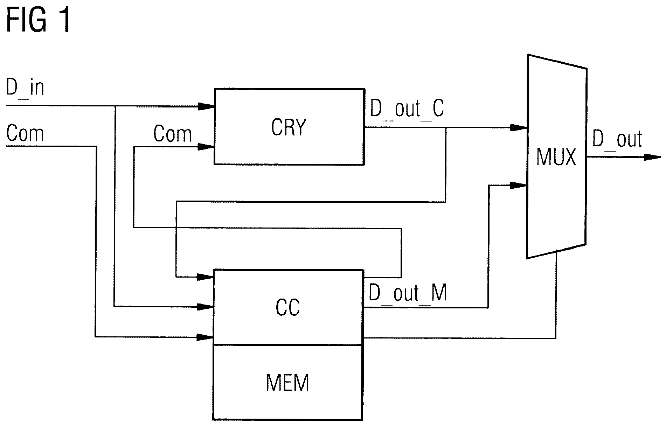

Figure 1 shows a schematic illustration of an exemplary embodiment of the system for performance improvement of a cryptographic module CRY. The cryptographic module CRY is used in an integrated circuit, especially in a System-on-Chip, to perform various encryption and/or decryption operations on input data D_in received. The execution of the encryption and/or decryption operations is triggered by corresponding commands Com received by the cryptographic module CRY. When the cryptographic module CRY receives input data D_in to be encrypted or decrypted, these input data D_in are processed in some clock cycles, for example. Encrypted or decrypted data D_out_C is calculated and then provides as encrypted/decrypted payload D_out to the output.

The cryptographic module CRY might be a so-called cryptographic accelerator CRY which is a co-processor specially designed to perform computationally intensive and power consuming cryptographic operations. A cryptographic accelerator CRY might be an implementation of a so-called Advanced Encryption Standard or AES module, for example.

Furthermore, the system comprises a monitoring cache unit CC. The monitoring cache unit CC supervises the cryptographic module CRY. The monitoring cache unit CC sees or receives the input data D_in, also received by the cryptographic module CRY, and the monitoring cache unit CC also receives directly the corresponding commands Com. The monitoring cache unit CC can also trigger the cryptographic module CRY to execute commands Com and/or operations either to encrypt or decrypt input data D_in by forwarding the received commands Com. Additionally, the monitoring cache unit CC can trigger the cryptographic module CRY to perform no encryption/decryption or to execute dummy operations, depending on the desired security level to be achieved, therefore the monitoring cache unit CC generates respective commands.

The monitoring cache module CC is arranged in parallel to the cryptographic module CRY, especially when regarding the data follow. It is also dedicated to the cryptographic module and cannot be used by other modules of the integrated circuit.

Furthermore, the system comprises a memory unit MEM which is associated with monitoring cache unit CC. The memory unit MEM may be incorporated into the monitoring cache unit CC or it is a part of it, i.e. the memory unit MEM is an external memory which is only connected to the monitoring cache unit CC without any other connections to other modules. The input data D_in and the corresponding commands Com received by the monitoring cache unit CC are saved within the memory unit MEM. Data D_out_C which are results of the encryption or decryption carried out by the cryptographic module CRY are also stored in the memory unit MEM - together with the corresponding input data D_in and commands Com they derive from and their encryption/decryption was triggered by. These stored encrypted/decrypted output Data D_out_C of the cryptographic module CRY can be returned from the memory unit MEM as memory output data D_out_M and provided as encrypted/decrypted payload D_out to the output.

The system also comprises a multiplexer unit MUX. The multiplexer unit MUX delivers the encrypted/decrypted data D_out_C, D_out_M as encrypted/decrypted payload D_out to e.g. other modules of the integrated circuit or System-on-Chip. The encrypted/decrypted data D_out_C, D_out_M is either provided by the cryptographic module CRY or by the monitoring cache unit CC and its associated memory unit MEM.

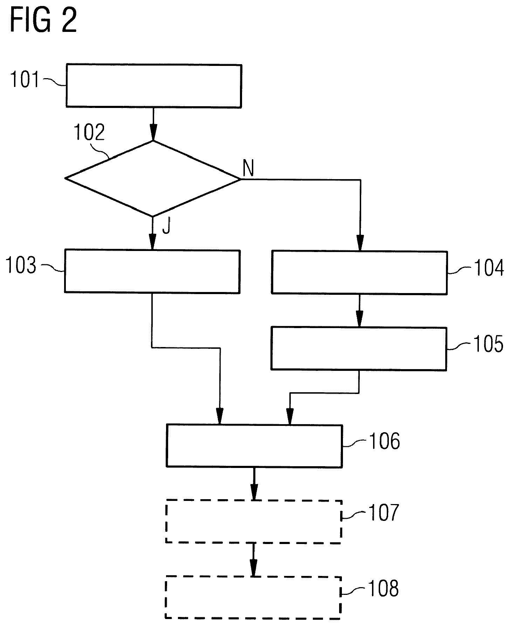

Figure 2 shows schematically a flow chart of a possible embodiment of the steps of the method to improve the performance of a cryptographic module CRY. The method starts with a step 101 of receiving input data D_in, which should be encrypted or decrypted by the cryptographic module CRY. The input data are received by the cryptographic module CRY and seen or received by the monitoring cache unit CC. Additionally, a corresponding command Com to encrypt or decrypt the input data D_in is received in step 101.

In step 102 it is checked, if the input data D_in and the corresponding command Com were received by the cryptographic module CRY previously - e.g. because of packet loss during data transmission. For example, it is checked in checking step 102, if the received input data D_in and the corresponding command Com are available in the memory unit MEM associated with the monitoring cache unit CC.

In case the input data D_in and the corresponding command Com were received by the by the cryptographic module CRY at least one time before, i.e. that the input data D_in and the corresponding command may be retrieved in the memory unit MEM associated with the monitoring cache module CC by the monitoring cache module CC, the method will continue with step 103.

In step 103 the monitoring cache unit CC reads data D_out_M out from the memory unit MEM and returns the data D_out_M. The data D_out_M returned are the encrypted/decrypted data based on the input data D_in received by the monitoring cache unit CC during receiving step 101. Then the encrypted/decrypted data D_out_M returned by the monitoring cache unit CC from the memory unit MEM are delivered to the multiplexer unit MUX during data providing step 106. The multiplexer unit MUX is then triggered to provide the encrypted/decrypted data D_out_M delivered by the monitoring cache unit CC as encrypted/decrypted payload to output data D_out for e.g. further processing by other modules of the integrated circuit or of the System-on-Chip.

If the input data D_in and the corresponding command Com were received by the cryptographic module CRY at least one time before (i.e. the input data D_in and corresponding command Com can be found in the memory unit MEM of the monitoring cache unit CC) and the respective encrypted/decrypted data D_out_M can be returned by the monitoring cache unit CC, the monitoring cache unit triggers the cryptographic module to skip the calculation of the encryption or decryption of the input data D_in in step 103. Alternatively, the monitoring cache unit CC can trigger the cryptographic module CRY to execute at least one dummy operation in order to hide the real power consumption of the cryptographic module CC and to prevent side channel attacks.

In case the input data D_in and the corresponding command Com were not received by the cryptographic module CRY at least one time before, i.e. the input data D_in and the corresponding command cannot be retrieved in the memory unit MEM associated with the monitoring cache module CC by the monitoring cache module CC, the method will continue with step 104.

In step 104 the cryptographic module is triggered to calculate the encryption or decryption of the input data D_in. Therefore, the monitoring cache unit CC forwards the corresponding command Com to the cryptographic module CRY, which the monitoring cache unit CC has received during receiving step 101. After the cryptographic module CRY has calculated the encrypted/decrypted data D_out_C based on the input data D_in and the corresponding command Com, the encrypted/decrypted data D_out_C are saved in the memory unit MEM of the monitoring cache unit CC in step 105. These data D_out_C are saved together with the respective input data D_in and the corresponding command Com to be retrieved, when the same input data D_in and command Com might be received again by the cryptographic module CRY and the monitoring cache unit CC. To enhance the security of the data D_in, D_out_C and the corresponding commands Com stored in the memory unit MEM, the data D_in, D_out_C and the corresponding commands Com may be obfuscated by a pre-defined obfuscation method during being saved in step 105. Hashing can be used as pre-defined obfuscation method, for example.

Additionally, the encrypted/decrypted data D_out_C calculated by the cryptographic module CRY are delivered to the multiplexer unit in data providing step 106. The multiplexer unit MUX is then triggered to provide the encrypted/decrypted data D_out_C delivered by the cryptographic module CRY as encrypted/decrypted payload to output data D_out for e.g. further processing by other modules of the integrated circuit or of the System-on-Chip.

Furthermore, in another possible embodiment the method for performance improvement of a cryptographic module CRY can be extended by optional steps 107 and 108. The data D_in, D_out_C as well as the corresponding Commands Com collected and saved in the memory unit MEM in step 105 can be analyzed in step 107 for retrieval of operational patterns. For example, artificial intelligence (AI) could be used to analyze the collected data D_in, D_out_C, Com. Meta-data such as e.g. headers, order of data, repeated data frequency, etc. can also be used for the analysis in optional step 107 in addition to the collected data which comprises at least the received input data D_in, the corresponding command Com and the calculated encrypted/decrypted data D_out_C based on the received input data D_in.

In case operational patterns are found in optional step 107, these patterns are stored in optional step 108. Based on these patterns stored and a current data flow, side channel attacks (e.g. DPA, cache attacks, etc.) could be recognized and directly detected by the monitoring cache unit CC. Respective actions like e.g. generating alarms, performing dummy operations or encryption, etc. could be taken.

### List of reference signs

CRY cryptographic module
CC monitoring cache unit
MEM memory unit
MUX multiplexer unit
D_in input data to be encrypted/decrypted
Com command for triggering encryption/ decrytion/dummy operation or no operation
D_out_C output data of the cryptographic module
D_out_M output data of the monitoring cache unit/memory unit
D_out output data, encrypted/decrypted payload

101 receiving step
102 checking step
103 data reading step
104 triggering step
105 calculation step
106 data providing step
107 data analyzing step
108 pattern storing step

## Claims

1. Method for performance improvement of a cryptographic module (CRY), which is part of an integrated circuit, especially a so-called System-on-Chip, the method comprising the steps of:
- receiving input data (D_in), which are to be encrypted or decrypted, by the cryptographic module (CRY) and by a monitoring cache unit (CC, 101);
- receiving a corresponding command (Com) to encrypt or to decrypt the input data (D_in, 101);
- checking (102), if the input data (D_in) to be encrypted or decrypted and the corresponding command (Com) were received previously;
- reading out (103) the corresponding encrypted or decrypted data (D_out_M) from a memory unit (MEM) associated with the monitoring cache unit (CC) and providing these data (D_out_M) as output data (D_out, 106), if the input data (D_in) to be encrypted or decrypted and the corresponding command (COM) were received previously;
- triggering (104) the cryptographic module (CRY) to calculate the encryption or decryption of the input data (D_in), saving (105) encrypted or decrypted data (D_out_C) calculated by the cryptographic module (CRY) in the memory unit (MEM) associated with the monitoring cache unit (CC) together with the input data (D_in) and the corresponding command (Com) and providing (106) the encrypted or decrypted data (D_out_C) as output data (D_out, 106), if the input data (D_in) to be encrypted or decrypted and the corresponding command (Com) were not received previously.

2. Method according to claim 1, **characterized in that** the monitoring cache unit (CC) triggers the cryptographic module (CRY) to calculate the encryption or decryption of the input data (D_in) by forwarding the corresponding command (Com) to the cryptographic unit (CRY, 104).

3. Method according to claim 1 or 2, **characterized in that** the monitoring cache unit (CC) triggers the cryptographic module (CRY) to execute at least one dummy operation (103), if the input data (D_in) to be encrypted or decrypted and the corresponding command (Com) were received previously.

4. Method according to any claims 1 to 3, **characterized in that** the data (D_in, Com, D_out_C) stored in the memory unit (MEM) associated with the monitoring cache unit (CC) are analyzed for operational patterns (107) and storing the operational patterns found (108).

5. Method according to claim 4, **characterized in that** data to be analyzed for operational patterns comprise at least input data (D_in), the corresponding commands (Com) and the corresponding encrypted or decrypted data (D_out_C) and that additionally corresponding meta-data like for example headers, order of data and/or repeated data frequency, etc. are used (107).

6. Method according to any of claim 1 to 5, **characterized in that** the data (D_in, D_out_C) and the corresponding commands (Com) stored in the memory unit (MEM) associated with the monitoring cache unit (CC) are obfuscated by a pre-defined obfuscation method (105).

7. Method according to claim 6, **characterized in that** hashing is used as pre-defined obfuscation method (105).

8. System for performance improvement of a cryptographic module (CRY) of an integrated circuit, especially a so-called System-on-Chip, which system is configured to implement the method of one of claims 1 to 7, the system at least comprising:
- the cryptographic module (CRY) to encrypt or decrypted received input data (D_in);
- a monitoring cache unit (CC) which supervises the cryptographic module (CRY), and which also receives the input data (D_in) to be encrypted or decrypted and corresponding commands (Com);
- and a memory unit (MEM) which is associated with the monitoring cache unit (CC) for saving the received input data (D_in), the corresponding commands (Com) and corresponding encrypted or decrypted data (D_out_C).

9. System according to claim 8, **characterized in that** the monitoring cache unit (CC) is arranged in parallel to the cryptographic module (CRY).

10. System according to one of claims 8 or 9, **characterized in that** the memory unit (MEM) is incorporated within the monitoring cache unit (CC).

11. System according to one of claims 8 to 10, **characterized in that** the system furthermore comprises a multiplexer unit (MUX) which provides output data (D_out) which are delivered by the monitoring cache unit (CC) or by the cryptographic module (CRY).
